# EUROPEAN PATENT APPLICATION

(11) **EP 1 788 051 A1**
(43) Date of publication of application: **23.05.2007**
(21) Application number: 05777077.8
(22) Date of filing: 25.08.2005
(51) Int. Cl.: C09D 201/00, C09D 5/08, C09D 5/44, C09D 7/12, C09D 163/00, C09D 175/04

(54) **ELECTRODEPOSITION COATING COMPOSITION AND COATED ARTICLE**

(30) Priority: 26.08.2004 JP 2004247130
(71) Applicant: KANSAI PAINT CO., LTD., Amagasaki-shi, Hyogo 661-8555 (JP)
(72) Inventor: SHIMODA, Masaharu, Hiratsuka-shi, Kanagawa 254-0018 (JP); NISHIGUCHI, Shigeo, Hiratsuka-shi, Kanagawa 254-0018 (JP); KAMIKADO, Koji, Yokohama-shi, Kanagawa 247-0007 (JP)
(74) Representative: Albrecht, Thomas
(86) International application number: PCT/JP2005/015954
(87) International publication number: WO 2006/022426

(57) **Abstract**

The present invention discloses an electrodeposition paint comprising at least one type of rust-preventive component selected from the group consisting of an ion of a metal selected from zirconium, titanium, cobalt, vanadium, tungsten and molybdenum, an oxymetal ion of said metal and a fluorometal ion of said metal, and a resin component, and having superior corrosion resistance, finish and paint stability.

## Description

### TECHNICAL FIELD

The present invention relates to an electrodeposition paint having superior paint film corrosion resistance, electrodeposition coatability on anti-rust steel plates, finish and paint stability.

### BACKGROUND ART

Automobile bodies have conventionally been treated with zinc phosphate as an undercoating for the purpose of improving corrosion resistance and adhesion of a paint film. However, since chemical treatment with a zinc phosphate treatment agent contains large amounts of phosphorous and nitrogen in the treatment agent, and contains large amounts of heavy metals such as nickel and manganese for the purpose of improving the performance of the formed chemical film, there are concerns over its effect on the environment. In addition, since large amounts of iron phosphate and other types of sludge are generated, there is also the problem of having to process the resulting industrial waste.

Although Japanese Patent Application Laid-open No. Hei 7(1995)-166111, for example, discloses a corrosion-preventive primer for use on automobile bodies in the form of an electrodeposition paint composition comprising an aqueous dispersion of a cationic resin at least partially neutralized able to be dispersed in water and electrodeposited, and a water-soluble zinc salt, electrodeposition paints containing water-soluble zinc salts such as zinc lactate or zinc acetate have problems with paint stability and finish.

### DISCLOSURE OF THE INVENTION

An object of the present invention is to provide an electrodeposition paint having superior corrosion resistance of the paint film, electrodeposition coatability on anti-rust steel plates, finish and paint stability.

As a result of conducting extensive studies, the inventors of the present invention found that the above-mentioned object of the present invention can be achieved by using a specific metal ion, or an oxymetal ion or a fluorometal ion of said metal, as a rust-preventive component of an electrodeposition paint, thereby leading to completion of the present-invention.

Thus, the present invention provides an electrodeposition paint comprising: (A) at least one rust-preventive component selected from the group consisting of an ion of a metal selected from zirconium, titanium, cobalt, vanadium, tungsten and molybdenum, an oxymetal ion of said metal and a fluorometal ion of said metal, and (B) a resin component.

The electrodeposition paint of the present invention has superior corrosion resistance, finish and other paint film performance as well as satisfactory paint stability.

In addition, since the electrodeposition paint of the present invention has superior paint stability, there are no changes in corrosion resistance or finish even after being used for an extended period of time on a painting line.

Although the reason for the superior paint stability and paint film performance of the electrodeposition paint of the present invention as described above is not clear, since ions, oxymetal ions or fluorometal ions of metals such as zirconium, titanium and molybdenum tend to precipitate easily at the interface of a painted object and an electrodeposited paint film, it is presumed that the metal oxide film formed from said ions greatly contributes to inhibiting corrosion beneath the paint film.

The following provides a more detailed explanation of the electrodeposition paint of the present invention.

### Rust-Preventive Component (A):

The electrodeposition paint of the present invention contains at least one type of rust-preventive component (A) selected from the group consisting of an ion of a metal selected from zirconium, titanium, cobalt, vanadium, tungsten and molybdenum, an oxymetal ion of said metal and a fluorometal ion of said metal. These rust -preventive components (A) can be imparted to the electrodeposition paint by blending a compound that generates said ions (to be referred to as a "metal ion compound") into the electrodeposition paint.

Examples of compounds that generate zirconium ions in the electrodeposition paint include zirconium nitrate, zirconium sulfate and zirconyl chloride; examples of compounds that generate oxymetal ions include zirconyl nitrate, zirconyl acetate and zirconyl sulfate; and, examples of compounds that generate fluorometal ions include zirconium hydrofluoric acid and zirconium hydrofluoric acid salts (such as sodium salts, potassium salts, lithium salts and ammonium salts).

Examples of compound that generate titanium ions in the electrodeposition paint include titanium chloride and titanium sulfate: and examples of compound that generate fluorometal ions include titanium hydrofluoric acid and titanium hydrofluoric acid salts (such as sodium salts, potassium salts, lithium salts and ammonium salts).

Examples of compounds that generate cobalt ions in the electrodeposition paint include cobalt chloride, cobalt bromide, cobalt iodide, cobalt nitrate, cobalt sulfate, cobalt acetate and cobalt ammonium sulfate.

Examples of compound that generate oxymetal ions of vanadium in the electrodeposition paint include lithium orthovanadate, sodium orthovanadate, lithium metavanadate, potassium metavanadate, sodium metavanadate, ammonium metavanadate, sodium pyrovanadate, vanadyl chloride and vanadyl sulfate.

Examples of compound that generate oxymetal ions of tungsten in the electrodeposition paint include lithium tungstate, sodium tungstate, potassium tungstate, sodium metatungstate, sodium paratungstate, ammonium pentatungstate, ammonium heptatungstate, sodium phosphotungstate and barium borotungstate.

Examples of compound that generate oxymetal ions of molybdenum in the electrodeposition paint include lithium molybdate, sodium molybdate, potassium molybdate, ammonium heptamolybdate, calcium molybdate, magnesium molybdate, strontium molybdate, barium molybdate, phosphomolybdic acid, sodium phosphomolybdate, and zinc phosphomolybdate.

These metal ion compounds can each be used alone or two or more types can be used in combination.

Among the above-mentioned metal ion compounds, zirconium hydrofluoric acid, titanium hydrofluoric acid and zirconyl nitrate.

Although the blending ratio of these metal ion compounds in the electrodeposition paint can be suitably varied according to the purpose of use of the paint and so on, with respect to paint stability and so on, in general, the blended amount of these metal ion compounds is preferably within the range of 0.01 to 100% by weight, particularly 0.03 to 50% by weight and more particularly 0.1 to 20% by weight based on the total solid content of the resin component (B), and as metal, preferably within the range of 10 ppm to 10% by weight, particularly 30 ppm to 5% by weight, and more particularly 100 ppm to 2% by weight.

Examples of methods for blending the metal ion compounds into the electrodeposition paint include the methods described in (1) to (3) below.
(1) A method in which a dissolving varnish is produced by combining other additives depending on the case with the resin component (B) and mixing well, and at least one type of neutralizer selected from formic acid, acetic acid, lactic acid, propionic acid, citric acid, malic acid and sulfaminic acid, or a mixture thereof, is added thereto in an aqueous medium followed by dispersing in water and blending a metal ion compound into the resulting emulsion.
(2) A method in which a pigment-dispersed paste is prepared in advance by adding and dispersing a pigment, catalyst, other additives and water in a metal ion compound, and adding the pigment-dispersed paste to an emulsion of the resin component (B). Examples of the pigment and catalyst include colored pigments such as titanium white and carbon black; extender pigments such as clay, talc and barium oxide; rust-preventive pigments such as aluminum dihydrogen tripolyphosphate and aluminum phosphomolybdate; organic tin compounds such as dibutyl tin oxide and dioctyl tin oxide; and tin compounds including dialkyl tin aliphatic or aromatic carboxylic acid salts such as dibutyl tin dilaurate, dioctyl tin dilaurate, dibutyl tin diacetate, dioctyl tin benzoateoxy, dibutyl tin benzoateoxy, dioctyl tin dibenzoate and dibutyl tin dibenzoate.
(3) A method in which a metal ion compound is diluted with water and then blended into a bath of a preliminarily prepared electrodeposition paint.

### Resin Component (B):

Although an electrodeposition paint into which the above-mentioned rust-preventive component (A) can be blended may be either an anionic electrodeposition paint or cationic electrodeposition paint, a cationic electrodeposition paint is typically preferable with respect to corrosion resistance.

A cationic resin is used as a base resin of the resin component (B) in the cationic electrodeposition paint, and a cationic resin for cationic electrodeposition paints known in the prior art can be similarly used for said cationic resin. Examples of cationic resins include resins having groups capable of being cationized in an aqueous dispersion in a molecule thereof, such as amino groups, ammonium salt groups, sulfonium salt groups and phosphonium salt groups. In addition, examples of resin types include resins ordinarily used as the base resin of electrodeposited paints, such as epoxy, acrylic, polybutadiene, alkyd and polyester resins.

An amine-added epoxy resin obtained by an addition reaction of an amino group-containing compound with a polyepoxide compound is preferable for the base resin of the resin component (B).

Examples of the amine-added epoxy resins include (1) addition products of a polyepoxide compound and a primary mono- and polyamine, secondary mono- and polyamine or mixture of primary and secondary polyamines (see, for example, US Patent No. 3,984,299); (2) addition products of a polyepoxide compound and a secondary mono- and polyamine having a ketiminated primary amino group (see, for example, US Patent No. 4,017,438); and (3) reaction products obtained by etherification of a polyepoxide compound and a hydroxyl compound having a ketiminated primary amino group [see, for example, Japanese Patent Application Laid-open No. Sho 59(1984)-43013].

The polyepoxide compound used to produce the above-mentioned amine-added epoxy resin is a compound having one or more, and preferably two or more, epoxy groups in a molecule thereof, and that having a number average molecular weight of typically at least 200, preferably within the range of 400 to 4,000 and more preferably within the range of 800 to 2,500, and an epoxy equivalent of at least 160, preferably within the range of 180 to 2,500 and more preferably within the range of 400 to 1,500, is suitable, with those obtained by a reaction between a polyphenol compound and epichlorhydrin being particularly preferable.

In the present invention, the base resin in the resin component (B) is preferably a resin (B-1) obtained by reacting an epoxy resin (b₁) having at least two epoxy group-containing functional groups in a molecule thereof represented by the following formula (1): 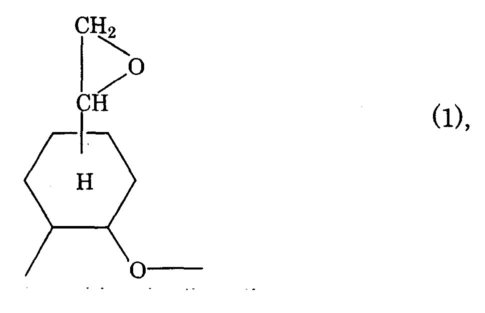 an amino compound (b₂) and/or a phenol compound (b₃).

### Epoxy Resin (b₁):

The epoxy resin (b₁) having the epoxy group-containing functional groups represented by the above-mentioned formula (1) can be a known compound, and examples of compounds that can be used are described in, for example, Japanese Patent Application Laid-open No. Sho 60(1985)-170620, Japanese Patent Application Laid-open No. Sho 62(1987)-135467, Japanese Patent Application Laid-open No. Sho 60(1985)-166675, Japanese Patent Application Laid-open No. Sho 60(1985)-161973 and Japanese Patent Application Laid-open No. Hei 2(1990)-265975.

In addition, epoxy resins in which a polymerization initiating residue, namely an active hydrogen-containing organic compound residue, is bonded to a terminal thereof are also included in the epoxy resin (b₁). Examples of precursors thereof in the form of active hydrogen-containing organic compounds include alcohol such as aliphatic monovalent alcohols, aromatic monovalent alcohols and divalent or more aliphatic or alicyclic polyvalent alcohols; phenols; fatty acids; aliphatic, alicyclic or aromatic dibasic acids or polybasic acids; oxyacids; polyvinyl alcohol, polyvinyl acetate partial hydrolysis products, starch, cellulose, cellulose acetate, cellulose acetate butyrate, hydroxyethyl cellulose, allyl polyol resins, styrene-allyl alcohol copolymers, alkyd resins, polyester polyol resins and polycaprolactone polyol resins. In addition, these active hydrogen-containing organic compounds may also have a structure in which an unsaturated double bond in the backbone thereof is epoxidated together with active hydrogen.

The epoxy resin (b₁) can be produced by, for example, using the above-mentioned active hydrogen-containing organic compound as an initiator, carrying out ring-opening (co-) polymerization by the epoxy groups respectively contained therein in the presence of 4-vinylcyclohexene-1-oxide alone or with another epoxy group-containing compound to form a polyether resin, and epoxidating the vinyl groups present in the side chains of said resin with an oxidant such as a peracid or hydroperoxide.

The 4-vinylcyclohexene-1-oxide can be obtained by, for example, partially epoxidating vinvlcyclohexene, obtained by dimerization of butadiene, with peracetic acid.

Although there are no limitations on the other copolymerizable epoxy group-containing compounds provided they have an epoxy group, in terms of production, compounds having one epoxy group in a molecule thereof are preferable, specific examples of which include ethylene oxide, propylene oxide, butylenes oxide, an α-olefin epoxide represented by the following formula (2): 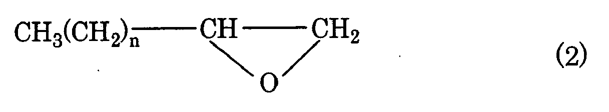 (wherein, n is an integer of 2 to 25); unsaturated compounds such as styrene oxide; glycidyl ethers of compounds having a hydroxyl group such as allyl glycidyl ether, 2-ethylhexyl glycidyl ether, methyl glycidyl ether, butyl glycidyl ether and phenyl glycidyl ether; and, glycidyl esters of organic acids such as fatty acids.

Examples of other epoxy group-containing compounds also include alicyclic oxirane group-containing vinyl monomers, specific examples of which are indicated below.

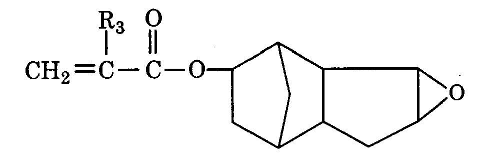

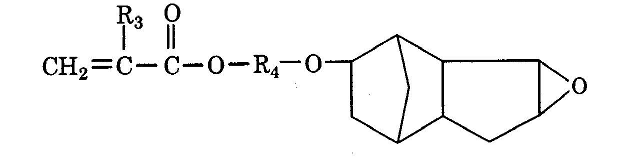

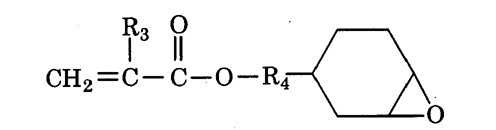

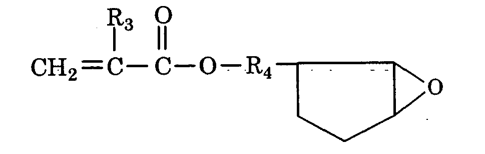

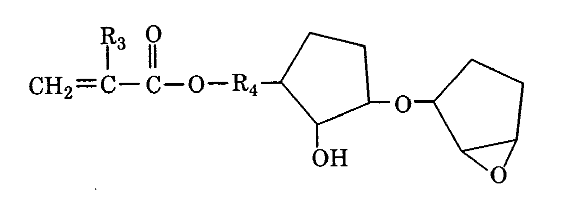

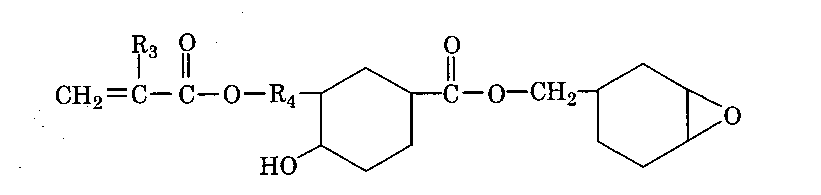

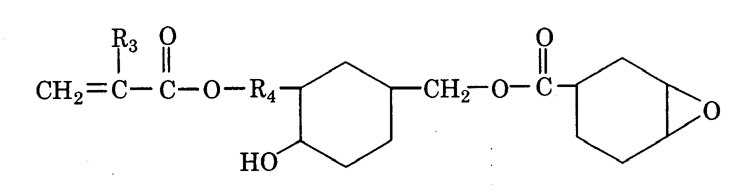

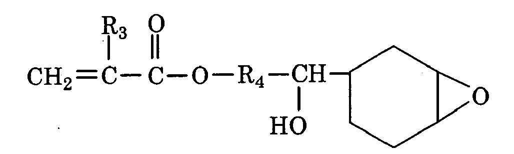

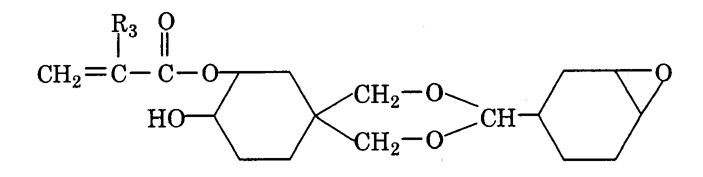

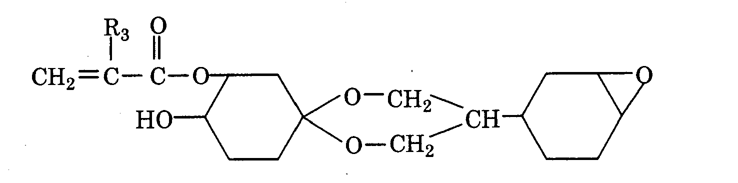

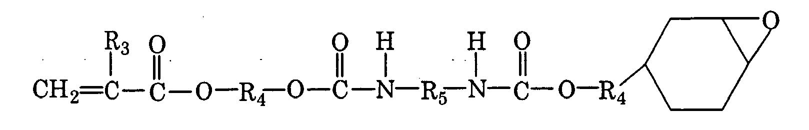

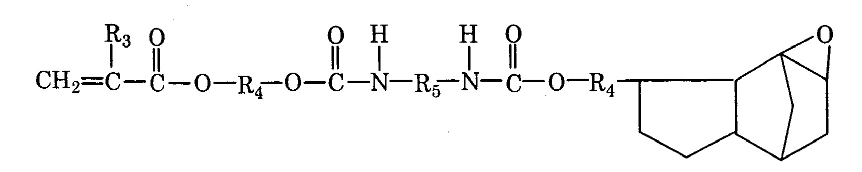

In each of the above-mentioned formulas, R₃ represents a hydrogen atom or a methyl group, R₄ represents a divalent aliphatic saturated hydrocarbon group having 1 to 6 carbon atoms, and R₅ represents a divalent hydrocarbon group having 1 to 10 carbon atoms.

In the above-mentioned formulas, the divalent aliphatic saturated hydrocarbon group having 1 to 6 carbon atoms represented by R₄ is, for example, a linear or branched alkylene group, examples of which include methylene, ethylene, propylene, tetramethylene, ethylethylene and pentamethylene groups. In addition, examples of the divalent hydrocarbon group having 1 to 10 carbon atoms represented by R₅ include methylene, ethylene, propylene, tetramethylene, ethylethylene, pentamethylene, hexamethylene, polymethylene, phenylene and the groups indicated below.

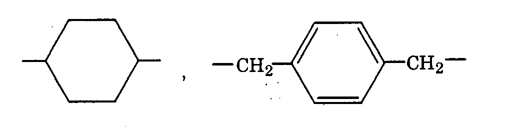

Moreover, a compound represented by the following formula (3) 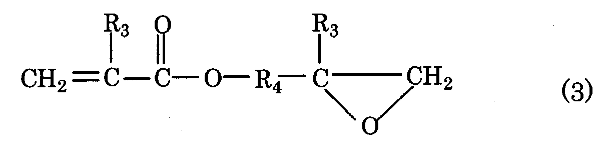 (wherein, R₃ and R₄ are the same as previously defined) such as glycidyl acrylate or glycidyl methacrylate, or compounds having an alicyclic saturated group as represented by the following formula (4), 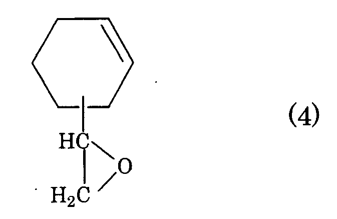 which is formed as a by-product by partial epoxidation of vinyl cyclohexane, can be used as other epoxy group-containing compounds.

Moreover, 4-vinylcycloheptene (vinyl norborene) can also be used.

The ring-opening (co-) polymerization reaction, which is carried out in the presence of 4-vinylcyclohexene-1-oxide alone or together with another epoxy group-containing compound, is preferably carried out in the presence of an active hydrogen-containing organic compound and using a catalyst.

Examples of catalysts include amines such as methylamine, ethylamine, propylamine and piperazine; pyridines; organic bases such as imidazoles; organic acids such as formic acid, acetic acid and propionic acid; inorganic acids such as sulfuric acid and hydrochloric acid; alkaline metal alcolates such as sodium methylate; bases such as KOH and NaOH; Lewis acids and complexes thereof such as BF₃SnCl₂, AlCl₃ and SnCl₄; and organic metal compounds such as triethyl aluminum and diethyl zinc.

These catalysts can ordinarily be used within the range of 0.001 to 10% by weight and preferably 0.1 to 5% by weight based on the reactants. The ring-opening (co-) polymerization reaction can typically be carried out at a temperature within the range of -70 to 200°C and preferably -30 to 100°C. This reaction is preferably carried out in a solvent, and ordinary organic solvents not having an active hydrogen can be used for the solvent.

The polyether resin (ring-opened (co-) polymer) obtained in this manner can then be converted to the epoxy resin (b₁) having the functional groups represented by the above-mentioned formula (1) by epoxidating a vinyl group (-CH=CH₂) directly bonded to a carbon atom of the alicyclic structure of that resin.

Epoxidation can be carried out by using a peracid or hydroperoxide. Examples of peracids that can be used include performic acid, peracetic acid, perbenzoic acid and trifluoroperacetic acid, while examples of hydroperoxides that can be used include hydrogen peroxide, tert-butyl peroxide and cumene peroxide. The epoxidation reaction can be carried out in the presence of a catalyst as necessary.

As a result of epoxidating a vinyl group based on the 4-vinylcyclohexene-1-oxide in the above-mentioned ring-opened (co-) polymer, the functional group represented by the formula (1) is formed. In this epoxidation reaction, if the above-mentioned alicyclic oxirane group-containing compound in the form of another epoxy group-containing compound is also present, although vinyl groups contained in said compound are also epoxidated, this is different from the functional group represented by the formula (1).

Whether or not a solvent is used and the reaction temperature in the epoxidation reaction can be suitably adjusted according to the apparatus used, physical properties of the raw materials and so on. As a result of a substituent represented by the following formula (5): 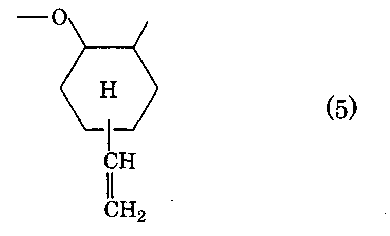 in the raw materials and/or a formed substituent represented by the formula (1) having caused a side reaction with an epoxidating agent and so on simultaneous to epoxidation of the vinyl groups in the raw material polymer depending on the conditions of the epoxidation reaction, a modified substituent is formed that may also be present in the epoxy resin (b₁).

The ratio at which these modified substituents are contained varies according to the type of epoxidating agent, molar ratio of the epoxidating agent and vinyl groups, reaction conditions and so on.

Commercially available products can also be used for this epoxy resin (b₁), an example of which is EHPE 3150 (Daicel Chemical Industries, Ltd.). This is the result of epoxidating the vinyl groups in the ring-opened polymer of the 4-vinylcyclohexene-1-oxide, and it has an average degree of polymerization within the range of 15 to 25.

At least two of the epoxy group-containing functional groups represented by the above-mentioned formula (1) may be present in a molecule of the epoxy resin (b₁), and the epoxy resin (b₁) can typically have an epoxy equivalent within the range of 140 to 1,000 and preferably 170 to 300, and a number average molecular weight (*1) preferably within the range of 200 to 50,000 and more preferably 1,000 to 10,000.
(*1) Number average molecular weight:
Determined in compliance with JIS K 0124-83 by calculating from a chromatogram, obtained with an RI refractometer at 40°C and a flow rate of 1.0 ml/minute using separation columns consisting of the TSK GEL4000H_{XL}, G3000H_{XL}, G2500H_{XL} and G2000HxL (Tosoh) and GPC tetrahydrofuran for the eluent, and a polystyrene calibration curve.

### Amino Compound (b₂):

The amino compound (b₂) reacted with the above-mentioned epoxy resin (b₁) is a cationizing component for cationizing the epoxy resin by introducing an amino group into the epoxy resin base, and that having at least one, and preferably 1 to 5, active hydrogens that react with epoxy groups is used for the amino compound (b₂).

Examples of the amino compound (b₂) include mono- or dialkyl amines such as monomethylamine, dimethylamine, monoethylamine, diethylamine, monoisopropylamine, diisopropylamine, monobutylamine or dibutylamine; alkanolamines such as monoethanolamine, diethanolamine, mono(2-hydroxypropyl)amine, di(2-hydroxypropyl)amine, tri(2-hydroxypropyl)amine, monomethylaminoethanol or monoethylaminoethanol; alkylene polyamines and ketimine forms of these polyamines such as ethylenediamine, propylenediamine, butylenediamine, hexamethylenediamine, tetraethylenepentamine, pentaethylenehexamine, diethylaminopropylamine, diethylenetriamine or triethylenetetramine; alkylene imines such as ethyleneimine or propyleneimine; and, cyclic amines such as piperazine, morpholine or pyrazine.

A compound having a hydroxyl group, a secondary amino group and an amide group in a molecule thereof, represented by the following formula (6): 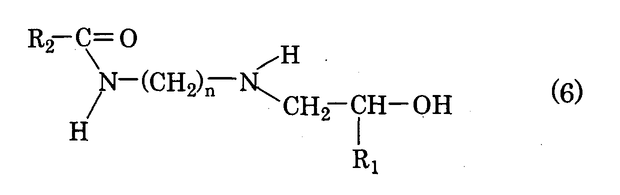 (wherein, n is an integer of 1 to 6, R₁ represents a hydrogen atom or an alkyl group having 1 to 2 carbon atoms, and R₂ represents a hydrocarbon group having 4 to 36 carbon atoms that may have a hydroxyl group and/or a polymerizable unsaturated bond) can also be used for the amino compound (b₂).

The amino compound represented by the above-mentioned formula (6) can be produced by adding about 1 mole of a monocarboxylic acid having 5 to 37 carbon atoms, and preferably 8 to 23 carbon atoms, to about 1 mole of an N-hydroxyalkylalkylenediamine as shown in, for example, the following reaction formula: 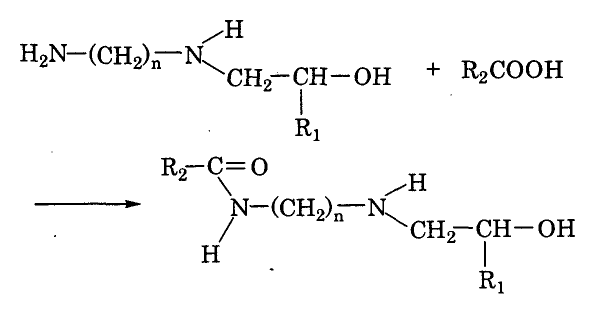 (wherein, R₁, R₂ and n are the same as previously defined).

Examples of diamines used in this reaction include hydroxyethylaminoethylamine, N-hydroxyethylethylenediamine, N-hydroxyethylpropylenediamine, N-hydroxyethylbutylenediamine, N-hydroxyethylpentylenediamine, N-hydroxyethylhexylenediamine, N-(2-hydroxy)propylethylenediamine, N-(2-hydroxy)propylpropylenediamine, N-(2-hydroxy)propylbutylenediamine, N-(2-hydroxy) propylpentylenediamine and N-(2-hydroxy)propylhexylenediamine, with hydroxyethylaminoethylamine and N-hydroxyethylpropylenediamine being particularly preferable.

In addition, examples of monocarboxylic acids include mixed fatty acids such as coconut oil fatty acid, castor oil fatty acid, rice bran oil fatty acid, rice bran oil fatty acid, soybean oil fatty acid, tall oil fatty acid, dehydrated castor oil fatty acid, safflower oil fatty acid, linseed oil fatty acid or tung oil fatty acid; and, caprylic acid, caproic acid, lauric acid, myristic acid, palmitic acid, stearic acid, oleic acid, ricinoleic acid, linoleic acid, linolenic acid, eleostearic acid, 12-hydroxystearic acid and behenic acid. Among these, stearic acid, oleic acid, 12-hydroxystearic acid and mixed fatty acids containing these acids are particularly preferable.

The reaction between the N-hydroxyalkylalkylenediamine and the monocarboxylic acid is carried out by, for example, mixing nearly equimolar amounts of both components, removing a predetermined amount of water generated by the reaction using an organic solvent such as toluene or methyl isobutyl ketone, and removing the residual organic solvent under reduced pressure and so on.

### Phenol Compound (b₃):

A compound having at least one, and preferably 1 to 5, phenolic hydroxyl groups in a molecule thereof can be used for the phenol compound (b₃), specific examples of which include polyvalent phenol compounds such as 2,2-bis(p-hydroxyphenyl) propane, 4,4'-dihydroxybenzophenone, 1,1-bis(p-hydroxyphenyl) ethane, 1,1-bis(p-hydroxyphenyl) isobutane, 2,2-bis(4-hydroxy-3-tert-butylphenyl) propane, bis(2-hydroxynaphthyl) methane, 1,5-dihydroxynaphthalene, bis(2,4-dihydroxyphenyl) methane, 1,1,2,2-tetra(p-hydroxyphenyl) ethane, 4,4-dihydroxydiphenyl ether, 4,4-dihydroxydiphenyl sulfone, phenol Novolak and cresol Novolak.

Moreover, monophenol compounds such as phenol, nonylphenol, α- or β-naphthol, p-tert-octylphenol and o- or p-phenylphenol can also be used.

In order to form a paint film having superior corrosion resistance, a reaction product of a bisphenol such as bisphenol A [2,2-bis(p-hydroxyphenyl) propane] or bisphenol F [bis(p-hydroxyphenyl) methane] and epichlorhydrin is used particularly preferably for the phenol compound (b₃).

Among these reaction products, those typically represented with the following formula having a number average molecular weight of at least 200 and preferably within the range of about 800 to about 3,000, and having on average two or less, and preferably 0.8 to 1.2, phenolic hydroxyl groups in a molecule thereof are particularly suitable: 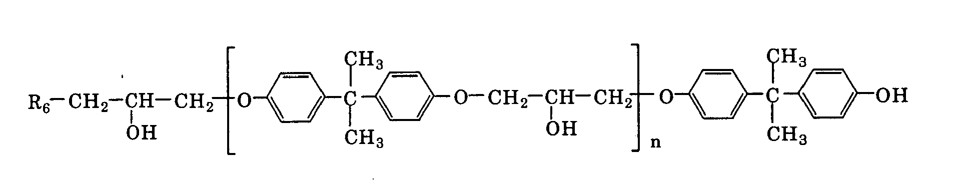 (wherein, n is, on average, and integer of 0 to 7, and R₆ represents a residue of an active hydrogen compound).

Examples of a precursor of R₆ in the above formula in the form of the active hydrogen compound include amines such as secondary amines; phenols such as nonylphenol; organic acids such as fatty acids; thiols; alcohols such as alkyl alcohols, cellusorb, butyl cellusorb or carbitol; and, inorganic acids. Among these, secondary amines having a primary hydroxyl group in the form of dialkanol amines and monophenols such as nonylphenol, phenylphenol and phenol are particularly preferable. In particular, the use of an amine containing a primary hydroxyl group improves curability, while the use of a monophenol improves stability.

Although the above-mentioned formula shows a form in which R₆- and OH are respectively bonded to both terminals thereof, one or both of R₆- and OH may be bonded to both terminals, or R₆- and OH may be bonded to each terminal.

Moreover, a compound obtained by, for example, reacting one mole of a bisphenol A diglycidyl ether type of polyepoxide having a molecular weight of 200 or more and preferably within the range of 380 to 2,000, one mole of a bisphenol A polyphenol having a molecular weight of 200 or more and preferably within the range of 200 to 2,000, and one mole of a compound having an active hydrogen at a temperature of 30 to 300°C and preferably 70 to 180°C in the presence of catalyst or solvent as necessary, can be used for the phenol compound (b₃). These reaction molar ratios are merely intended to be examples, are not limiting and can be arbitrary selected.

In addition, examples compounds reacted with bisphenol A that can be used for the phenol compound (b₃) include polyols such as dimer diol, ethylene glycol, propylene glycol or butylenes glycol; polyether glycols such as polyethylene glycol, polypropylene glycol or polybutylene glycol; polyester polyols such as polycaprolactone; polycarboxylic acids; polyisocyanates; monoisocyanates; oxides of unsaturated compounds such as ethylene oxide, propylene oxide, butylenes oxide or styrene oxide; glycidyl ethers of compounds having a hydroxyl group such as allyl glycidyl ether, polypropylene glycol diglycidyl ether, 2-ethylhexyl glycidyl ether, methyl glycidyl ether, butyl glycidyl ether or phenyl glycidyl ether; glycidyl esters of organic acids such as fatty acids; and, alicyclic oxirane-containing compounds. Moreover, compounds in which δ-4-caprolactone or an acrylic monomer and so on have been graft polymerized with these compounds can also be used.

### Resin (B-1):

Resin (B-1) is obtained by reacting the amino compound (b₂) and/or the phenol compound (b₃) with the previously described epoxy resin (b₁).

This resin (B-1) it advantageous in terms of having superior corrosion resistance and superior electrodeposition coatability to alloyed zinc-plated steel plates as compared with those conventionally obtained by a reaction with a bisphenol A epoxy resin.

There are no particular limitations on the reaction ratio of the epoxy resin (b₁), the amino compound (b₂) and the phenol compound (b₃), and although the reaction ratio can be suitably selected according to the application of the resulting paint resin and so on, in general, the amino compound (b₂) is preferably used in a ratio such that the primary or secondary amino groups thereof are present within the range of 0.1 to 1 mole, and particularly preferably 0.4 to 0.9 moles, and the phenol compound (b₃) is preferably used in a ratio such that the phenolic hydroxyl groups thereof are present within the range of 0.02 to 0.4 moles, and particularly preferably 0.1 to 0.3 moles, per epoxy group-containing functional group of the epoxy resin (b₁). In addition, the total number of moles of the primary or secondary amino groups of the amino compound (b₂) and the phenolic hydroxyl groups of the phenol compound (b₃) is preferably within the range of 0.75 to 1.5 moles, and particularly preferably 0.8 to 1.2 moles, per epoxy group-containing functional group in the epoxy resin (b₁).

The reaction between the epoxy resin (b₁) and the amino compound (b₂) and/or the phenol compound (b₃) can be carried out at a temperature, for example, within the range of 50 to 300°C and particularly 70 to 200°C. There are no particular limitations on the order of the reaction, and all components may be reacted simultaneously or each of the other components may be added in an arbitrary order and sequentially reacted with the epoxy resin (b₁).

The resin (B-1) preferably has an amine value typically within the range of 20 to 150 mgKOH/g, particularly 30 to 125 mg KOH/g and more particularly 35 to 100 mgKOH/g, has a hydroxyl value typically within the range of 300 to 1,000 mgKOH/g, particularly 325 to 850 mgKOH/g and more particularly 350 to 700 mgKOH/g, and has a number average molecular weight typically within the range of 800 to 15,000, particularly 900 to 10,000 and more particularly 1,000 to 6,000 (*1).

Differing from a conventional cationic resin, the resin (B-1) has superior water dispersivity as a result of the hydrophilic portion and hydrophobic portion being jointly polarized. Consequently, the electrodeposition paint of the present invention containing the resin (B-1) as a base resin has superior paint stability even if at least one type of rust-preventive component (A) is present selected from the group consisting of an ion, oxymetal ion and fluorometal ion of a metal selected from the group consisting of zirconium, titanium, cobalt, vanadium, tungsten and molybdenum.

A cationization agent indicated below can be further reacted with the resin (B-1) as necessary either during or after production thereof, and examples of this cationization agent that can be used include tertiary amines such as triethylamine, triethanolamine, N,N-dimethylethanolamine, N,N-methyldiethanolamine, N,N-diethylethanolamine or N-ethyldiethanolamine. These can be protonated with acid in advance, or reacted with an epoxy group to form a quaternary salt.

In addition to the above-mentioned amino compounds, a tertiary sulfonium salt may also be used by reacting a sulfide such as diethyl sulfide, diphenyl sulfide, tetramethylene sulfide or thiodiethanol with a salt of an acid such as boric acid, carbonic acid or an organic monocarboxylic acid.

Moreover, a quaternary phosphonium salt, obtained by reacting a tertiary phosphine such as triethylphosphine, phenyldimethylphosphine, diphenylmethylphosphine or triphenylphosphine with a salt of an acid such as formic acid, acetic acid, lactic acid or glycolic acid, can also be used as a cationization agent.

### Blocked Polyisocyanate Compound (B-2):

The electrodeposition paint of the present invention can contain an addition reaction product of a polyisocyanate compound and a blocking agent at nearly the chemically theoretical amounts thereof in the form of a blocked polyisocyanate compound (B-2) as a portion (curing agent) of the resin component (B).

A known compound can be used for the polyisocyanate compound used here, examples of which include aromatic, aliphatic or alicyclic polyisocyanate compounds such as tolylene diisocyanate, xylylene diisocyanate, phenylene diisocyanate, diphenylmethane-2,4-diisocyanate, diphenylmethane-4,4'-diisocyanate (normally referred to as MDI), crude MDI, bis(isocyanatomethyl) cyclohexane, tetramethylene diisocyanate, hexamethylene diisocyanate, methylene diisocyanate or isophorone diisocyanate; aliphatic or alicyclic polyisocyanate compounds; cyclic polymers of these polyisocyanate compounds; isocyanate Biuret forms; and, terminal isocyanate-containing compounds obtained by reacting a low molecular weight active hydrogen-containing compound such as ethylene glycol, propylene glycol, trimethylol propane, hexanetriol or castor oil with an excess amount of these polyisocyanate compounds. These can each be used alone or two or more types can be used in combination.

On the other hand, the blocking agent blocks the isocyanate groups of the polyisocyanate compound by addition thereto, and although the blocked polyisocyanate compound formed as a result of that addition is stable at room temperature, when heated to the baking temperature of the paint film (normally about 100 to 200°C), the blocking agent preferably dissociates allowing the regeneration of free isocyanate groups.

Examples of blocking agents that satisfy this requirement include lactam-based compounds such as ε-caprolactam or γ-butyrolactam; oxime-based compounds such as methyl ethyl ketoxime or cyclohexanone oxime; phenol-based compounds such as phenol, para-t-butylphenol or cresol; aliphatic alcohols such as n-butanol or 2-ethylhexanol; aromatic alkyl alcohols such as phenyl carbinol or methylphenyl carbinol; and, ethyl alcohol-based compounds such as ethylene glycol monobutyl ether or diethylene glycol monoethyl ether.

In addition to these blocking agents, diols having two hydroxyl groups with mutually different reactivities and a molecular weight of 76 to 150, or carboxyl group-containing diols having a molecular weight of 106 to 500, can also be used.

The above-mentioned diols can be those have two hydroxyl groups with different reactivities, such as a combination of a primary hydroxyl group and a secondary hydroxyl group, a primary hydroxyl group and a tertiary hydroxyl group, or a secondary hydroxyl group and a tertiary hydroxyl group, and have a molecular weight of 76 to 150, specific examples of which include diols having two hydroxyl groups with different reactivities such as propylene glycol, dipropylene glycol, 1,3-butanediol, 1,2-butanediol, 3-methyl-1,2-butanediol, 1,2-pentanediol, 1,4-pentanediol, 3-methyl-4,3-pentanediol, 3-methyl-4,5-pentanediol, 2,2,4-trimethyl-1,3- pentanediol, 1,5-hexanediol and 1,4-hexanediol.

Examples of the above-mentioned carboxyl group-containing diols include 2,2-dimethylol propionic acid, 2,2-dimethylol butanoic acid, dimethylol valeric acid and glyceric acid.

The above-mentioned blocked polyisocyanate compound (B-2) can be used within the range of 5 to 50% by weight, preferably 10 to 40% by weight and more preferably 15 to 35% by weight based on the total solid content of the resin component (B).

### Electrodeposition Paint:

The electrodeposition paint of the present invention can further contain, in addition to the rust-preventive component (A) and the resin component (B) previously described, other additives such as a colored pigment, extender pigment, rust-preventive pigment, organic solvent, pigment dispersant, surface adjuster, surfactant, acid or catalyst, in an amount in which they are ordinarily used, as necessary.

The electrodeposition paint of the present invention can be prepared in accordance with ordinary methods by dispersing each of the above-mentioned components in an aqueous medium and suitably diluting with an aqueous medium.

An electrodeposition paint prepared in the manner described above can be applied to the surface of a desired base material by electrodeposition coating.

Electrodeposition coating is typically carried out under conditions of a bath temperature of 15 to 45°C and applied voltage of 10 to 400 V by diluting to a bath solid concentration of about 5 to 40% by weight with deionized water, and using an electrodeposition paint bath having a pH adjusted to within the range of 3.0 to 9.0.

Although there are no particular limitations on the film thickness of a paint film formed using the electrodeposition paint of the present invention, in general, it is preferably within the range of 5 to 40 µm and particularly preferably 10 to 30 µm based on the thickness of the cured paint film. The paint film baking temperature is suitably within the range of about 120 to 200°C and preferably about 140 to 180°C at the surface of the coated article, and the baking time can be about 5 to 60 minutes and preferably about 10 to 30 minutes.

### Examples

Although the following provides a more detailed explanation of the present invention based on examples thereof, the present invention is not limited to only these examples. Furthermore, the terms "parts" and "%" refer to "parts by weight" and "% by weight", respectively.

### Production Example 1 - Production Example of Resin (B-1)

397 parts of ethylene glycol monobutyl ether, 900 parts of EHPE-3150 (Daicel Chemical Industries, Ltd., epoxy equivalent: 180), 370 parts of an amino compound (*2), 315 parts of diethanolamine and 1651 parts of a monophenol compound (*3) were added to a flask equipped with a stirrer, thermometer, dropping funnel and reflux condenser, heated to 150°C and reacted until the residual number of epoxy groups reached 0 while stirring. Moreover, 3610 parts of bisphenol A diglycidyl ether having an epoxy equivalent of 190, 1596 parts of bisphenol A, 525 parts of diethanolamine and 1433 parts of ethylene glycol monobutyl ether were further added and reacted at 150°C until the number of residual epoxy groups reached 0 to obtain a resin no. 1 having a solid content of 80%, amine value of 65 mgKOH/g and primary hydroxyl group value of 455 mgKOH/g.

### (*2) Amino Compound

300 parts of 12-hydroxystearic acid, 104 parts of hydroxyethylaminoethylamine and 80 parts of toluene were charged into a reaction vessel equipped with a thermometer, stirrer, reflux condenser and moisture separator, and after gradually heating while stirring and separating out 18 parts of reaction water while raising the temperature and removing toluene as necessary, the remaining toluene was removed under reduced pressure to obtain an amino compound having an amine value of 148 mgKOH/g and a solidification point of 69°C.

### (*3) Phenol Compound

105 parts of diethanolamine, 760 parts of bisphenol A diglycidyl ether having an epoxy equivalent of 190, 456 parts of bisphenol A and 330 parts of ethylene glycol monobutyl ether were added to a flask equipped with a stirrer, thermometer, dropping funnel and reflux condenser and reacted at 150°C until the number of remaining epoxy groups reached 0 to obtain a phenol compound having a solid content of 80%.

### Production Example 2 - Production Example of a Curing Agent

46 g of methyl isobutyl ketone were added to 270 g of Cosmonate M-200 (Mitsui Chemicals Inc., crude MDI) and heated to 70°C. Moreover, 281 g of diethylene glycol monoethyl ether were slowly added thereto followed by heating to 90°C. Samples were taken over time while holding at this temperature, the reaction was stopped after confirming that unreacted isocyanate was no longer absorbed as determined by measurement of infrared absorption spectra, and the amount of solvent was adjusted to obtain a blocked polyisocyanate type of curing agent having a solid content of 90%.

### Production Example 3 - Production Example of Pigment-Dispersed Paste No. 1

4.38 parts of resin no. 1 equivalent to 80% produced in Production Example 1 (solid content: 3.5 parts), 1.46 parts of 10% acetic acid, 3 parts of zirconium hydrofluoric acid, 14.5 parts of JR-600E (*4), 0.3 parts of Carbon MA-7 (*5), 7.0 parts of Hydride PXN (*6), 1.0 parts of bismuth hydroxide, 1 part of organic tin and 21.7 parts of deionized water were mixed and dispersed to obtain a pigment-dispersed paste no. 1 having a solid content of 55.0% by weight.

### Production Examples 4 to 10 - Production Examples of Pigment-Dispersed Pastes Nos. 2 to 8

Pigment-dispersed pastes nos. 2 to 8 were obtained using the same procedure as Production Example 3 with the exception of using the compounds indicated in Table 1 below instead of zirconium hydrofluoric acid.

**Table 1**

| | | Prod. Ex.3 | Prod. Ex. 4 | Prod. Ex.5 | Prod. Ex.6 | Prod. Ex. 7 | Prod. Ex. 8 | Prod. Ex. 9 | Prod. Ex. 10 |
|---|---|---|---|---|---|---|---|---|---|
| Pigment-dispersed paste | | No. 1 | No. 2 | No. 3 | No. 4 | No.5 | No. 6 | No. 7 | No. 8 |
| Pigment-dispersed resin | Solid content: 80%, resin (B-1) | 44 (3.5) | 44 (3.5) | 44 (3.5) | 44 (3.5) | 44 (3.5) | 44 (3.5) | 44 (3.5) | 44 (3.5) |
| Neutralizer | 10% acetic acid | 1.5 | 1.5 | 1.5 | 1.5 | 1.5 | 1.5 | 1.5 | 1.5 |
| Rust-preventive component (A) | Zirconium hydrofluoric acid | 3 | | | | | | | |
| | Titanium hydrofluoric acid | | 3 | | | | | | |
| | Zirconyl sulfate | | | 3 | | | | | |
| | Ammonium molybdate | | | | 3 | | | | |
| | Ammonium meta-vanadate | | | | | 3 | | | |
| | Aluminum dihydrogen tripolyphosphate | | | | | | 3 | | |
| | Zinc lactate | | | | | | | 3 | |
| Colored pigment | JR-600E (*4) | 14.5 | 14.5 | 14.5 | 14.5 | 14.5 | 14.5 | 14.5 | 14.5 |
| | Carbon MA-7 (*5) | 0.3 | 0.3 | 0.3 | 0.3 | 0.3 | 0.3 | 0.3 | 0.3 |
| Extender pigment | Hydride PXN (*6) | 7 | 7 | 7 | 7 | 7 | 7 | 7 | 7 |
| Dioctyl tin oxide | | 1 | 1 | 1 | 1 | 1 | 1 | 1 | 1 |
| Deionized water | | 21.6 | 21.6 | 21.6 | 21.6 | 21.6 | 21.6 | 21.6 | 19.1 |
| 55% pigment-dispersed paste | | 53.5 (29.3) | 53.3 (29.3) | 53.5 (29.3) | 53.5 (29.3) | 53.5 (29.3) | 53.5 (29.3) | 53.3 (29.3) | 47.8 (26.3) |

| | | | | | | | | | |
|---|---|---|---|---|---|---|---|---|---|
| (*4) JR-600E: Tayca Corporation, titanium white (*5) Carbon MA-7: Mitsubishi Chemical Corporation, carbon black (*6) Hydride PXN: Georgia Kaolin, kaolin | | | | | | | | | |

### Production Example 11 - Production Example of Emulsion No. 1

87.5 parts of resin no. 1 obtained in Production Example 1 (solid content: 70 parts), 33.3 parts of the curing agent obtained in Production Example 2 (solid content: 30 parts) and 10.7 parts of 10% formic acid were mixed and stirred to a homogeneous mixture followed by dropping in 162.5 parts of deionized water over the course of about 15 minutes while stirring vigorously to obtain an emulsion having a solid content of 34%.

### Example 1

53.5 parts of the pigment-dispersed paste no. 1 obtained in Production Example 1 (solid content: 29.3 parts) and 299.2 parts of deionized water were added to 294 parts of emulsion no. 1 (solid content: 100 parts) to obtain an electrodeposition paint no. 1 having a solid content of 20%.

### Examples 2 to 5 and Comparative Examples 1 to 3

Electrodeposition paints nos. 2 to 8 were obtained in the same manner as Example 1 using the formulations shown in Table 2 below.

**Table 2**

| | | Ex. 1 | Ex. 2 | Ex. 3 | Ex.4 | Ex.5 | Comp. Ex. 1 | Comp. Ex.2 | Comp. Ex. 3 |
|---|---|---|---|---|---|---|---|---|---|
| Electrodeposition paint | | No. 1 | No. 2 | No. 3 | No. 4 | No. 5 | No. 6 | No. 7 | No. 8 |
| | Emulsion | 294 (100) | 294 (100) | 294 (100) | 294 (100) | 294 (100) | 294 (100) | 294 (100) | 294 (100) |
| | Pigment-dispersed paste no. 1 | 53.3 (29.3) | | | | | | | |
| | Pigment-dispersed paste no. 2 | | 53.3 (29.3) | | | | | | |
| | Pigment-dispersed paste no. 3 | | | 53.3 (29.3) | | | | | |
| Paint formulation | Pigment-dispersed paste no. 4 | | | | 53.3 (29.3) | | | | |
| | Pigment-dispersed paste no. 5 | | | | | 53.3 (29.3) | | | |
| | Pigment-dispersed paste no. 6 | | | | | | 53.3 (29.3) | | |
| | Pigment-dispersed paste no. 7 | | | | | | | 53.3 (29.3) | |
| | Pigment-dispersed paste no. 8 | | | | | | | | 47.8 (26.3) |
| | Deionized water | 299.2 | 299.2 | 299.2 | 299.2 | 299.2 | 299.2 | 299.2 | 289.7 |
| | 20% bath | 646.5 (129.3) | 646.5 (129.3) | 646.5 (129.3) | 646.5 (129.3) | 646.5 (129.3) | 646.5 (129.3) | 646.5 (129.3) | 631.5 (126.3) |

### Production of Test Pieces and Performance Tests

Cold-rolled steel sheets were subjected to chemical treatment (Palbond #3020, Nihon Parkerizing Co., Ltd., zinc phosphate treatment agent) followed by electrodeposition coating for 3 minutes adjusting the applied voltage to obtain a film thickness of 20 µm using the electrodeposition paints obtained in the examples and comparative examples. Next, the coated films were baked for 20 minutes at 170°C with an electric dryer to obtain the test sheets.

The corrosion resistance and finish of the produced test plates and the electrodepositing coating suitability and paint stability of anti-rust steel plates were evaluated using the methods described below. The results are summarized in Table 3.

### (*7): Corrosion Resistance:

Cross-cut scratches were made in the electrodeposition coating with a knife so as to reach the base metal of the test plates followed by conducting a 1200 hour salt water spraying resistance test in compliance with JISZ-2371. The test plates were evaluated using the criteria below based on the presence of rust in the scratches and the width of blistering.
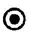 indicates rust and maximum blistering width of less than 2 mm from the cuts (one side).
○ indicates rust and maximum blistering width of 2 to less than 3 mm from the cuts (one side).
Δ indicates rust and maximum blistering width of 3 mm to less than 4 mm from the cuts (one side).
× indicates rust and maximum blistering width of 4 mm or more from the cuts (one side).

### (*8): Electrodeposition Coating Suitability on Anti-Rust Steel Sheets

Alloyed zinc-plated steel sheets subjected to chemical treatment (Palbond #3020, Nihon Parkerizing Co., Ltd., zinc phosphate treatment agent) were coated at a bath temperature of 28°C and voltage allowing the obtaining of a film thickness of 20 µm using the electrodeposition paints of the examples and comparative examples followed by baking and drying for 20 minutes at 170°C. Subsequently, the numbers of pinholes formed in the coated plates (10 cm × 10 cm) were counted.
○ indicates the absence of pinhole formation.
Δ indicates the formation of 1 to 5 pinholes.
× indicates the formation of 6 or more pinholes.

### (*9): Finish:

The surface roughness (Ra) of the coated surfaces of the test sheets were measured at a cutoff of 0.8 mm using the SurfTest 301 (Mitutoyo Corporation, surface roughness tester).
○ indicates surface roughness (Ra) of less than 0.2.
Δ indicates surface roughness (Ra) of 0.2 to less than 0.3.
× indicates surface roughness (Ra) of 0.3 or more.

### (*10): Paint Stability:

Each electrodeposition paint was stirred for 4 weeks at 30°C with the top of the paint container left open followed by measuring the amount of filter residue after filtering using a 400 mesh filter mesh.
○ indicates an amount of less than 10 mg/L.
Δ indicates an amount of 10 mg/L to less than 15 mg/L.
× indicates an amount of 15 mg/L or more.

**Table 3**

| | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|
| Electrodeposition paint | No.1 | No. 2 | No. 3 | No. 4 | No. 5 | No. 6 | No. 7 | No. 8 |
| Corrosion resistance (*7) | 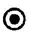 | 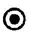 | 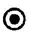 | ○ | ○ | Δ | Δ | × |
| Electrodeposition coating suitability on anti-rust steel sheets (*8) | ○ | ○ | ○ | ○ | ○ | Δ | Δ | ○ |
| Finish (*9) | ○ | ○ | ○ | ○ | ○ | ○ | Δ | ○ |
| Paint stability (*10) | ○ | ○ | ○ | ○ | ○ | ○ | Δ | ○ |

## Claims

1. An electrodeposition paint comprising: (A) at least one rust-preventive component selected from the group consisting of an ion of a metal selected from zirconium, titanium, cobalt, vanadium, tungsten and molybdenum, an oxymetal ion of said metal and a fluorometal ion of said metal, and (B) a resin component.

2. The electrodeposition paint according to claim 1, wherein the rust-preventive component (A) is derived from a metal ion compound that generates ions of the rust-preventive component (A) in the electrodeposition paint, and the metal ion compound is selected from the group consisting of zirconium nitrate, zirconium sulfate, zirconyl chloride, zirconyl nitrate, zirconyl acetate, zirconyl sulfate, zirconium hydrofluoric acid, zirconium hydrofluoric acid salt, titanium chloride, titanium sulfate, titanium hydrofluoric acid, titanium hydrofluoric acid salt, cobalt chloride, cobalt bromide, cobalt iodide, cobalt nitrate, cobalt sulfate, cobalt acetate, cobalt ammonium sulfate, lithium orthovanadate, sodium orthovanadate, lithium metavanadate, potassium metavanadate, sodium metavanadate, ammonium metavanadate, sodium pyrovanadate, vanadyl chloride, vanadyl sulfate, lithium tungstate, sodium tungstate, potassium tungstate, sodium metatungstate, sodium paratungstate, ammonium pentatungstate, ammonium heptatungstate, sodium phosphotungstate, barium borotungstate, lithium molybdate, sodium molybdate, potassium molybdate, ammonium heptamolybdate, calcium molybdate, magnesium molybdate, strontium molybdate, barium molybdate, phosphomolybdic acid, sodium phosphomolybdate, and zinc phosphomolybdate.

3. The electrodeposition paint according to claim 2, wherein the metal ion compound is selected from the group consisting of zirconium hydrofluoric acid, titanium hydrofluoric acid and zirconyl nitrate.

4. The electrodeposition paint according to claim 2, wherein the metal ion compound is incorporated within the range of 0.01 to 100% by weight based on the total solid content of the resin component (B).

5. The electrodeposition paint according to claim 2, wherein the metal ion compound is incorporated within the range of 10 ppm to 10% by weight as metal based on the total solid content of the resin component (B).

6. The electrodeposition paint according to claim 1, wherein the resin component (B) comprises a base resin in the form of a resin (B-1) obtained by reacting an epoxy resin (b₁) having at least two epoxy group-containing functional groups in a molecule thereof represented by the following formula (1): 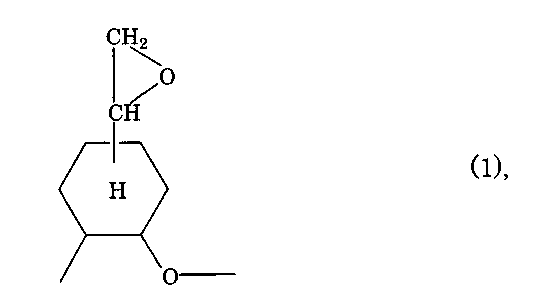 an amino compound (b₂) and/or a phenol compound (b₃).

7. The electrodeposition paint according to claim 6, wherein the resin (B-1) has an amine value within the range of 20 to 150 mgKOH/g, a hydroxyl value within the range of 300 to 1,000 mgKOH/g, and a number average molecular weight within the range of 800 to 15,000.

8. The electrodeposition paint according to claim 1, wherein the resin component (B) contains a curing agent in the form of a blocked polyisocyanate compound (B-2).

9. A coating method comprising electrodeposition coating of the electrodeposition paint according to claim 1 onto the surface of a base material.

10. An article coated with the electrodeposition paint according to claim 1.
